**Europäisches Patentamt**

**European Patent Office**

**Office européen des brevets**

(19)

(11) Publication number: **0 117 869**
**A1**

(12)

# EUROPEAN PATENT APPLICATION

published in accordance with Art. 158(3) EPC

(21) Application number: 83902129.2

(22) Date of filing: 05.07.83

Data of the international application taken as a basis:

(86) International application number:
PCT/JP83/00215

(87) International publication number:
WO84/00439 (02.02.84 84/03)

(51) Int. Cl.³: **G 11 B 15/60**
**G 11 B 15/52**

(30) Priority: 06.07.82 JP 117167/82
20.08.82 JP 145023/82
26.08.82 JP 148692/82
26.10.82 JP 188505/82
26.10.82 JP 188506/82
26.10.82 JP 188507/82

(43) Date of publication of application:
12.09.84 Bulletin 84/37

(84) Designated Contracting States:
DE FR GB

(71) Applicant: Matsushita Electric Industrial Co., Ltd.
1006, Oaza Kadoma
Kadoma-shi Osaka-fu, 571(JP)

(72) Inventor: IMANISHI, Kiyokazu
3-1, Higashitoyoura-cho Higashiosaka-shi
Osaka-fu 579(JP)

(72) Inventor: ICHIYANAGI, Takashi
3-11-26, Higashikori Hirakata-shi
Osaka-fu 573(JP)

(72) Inventor: SAKURAI, Yasuo
7-3, Rozuhausu 27 Nishiki-cho Neyagawa-shi
Osaka-fu 572(JP)

(72) Inventor: NAKA, Hiroyuki
3-21-11, Asahiku Shimizu Osaka-shi
Osaka-fu 535(JP)

(72) Inventor: KISHIMOTO, Masaru
87-369, Ooaza Wakabadai Heguri-cho Ikoma-gun
Nara-ken 636(JP)

(74) Representative: Crawford, Andrew Birkby et al,
A.A. THORNTON & CO. Northumberland House 303-306
High Holborn
London WC1V 7LE(GB)

(54) **ROTARY HEAD ASSEMBLY.**

(57) In a rotary head assembly which has a stationary cylinder (26) with a fixed cylindrical part, and a rotatable rotary member (24) of a diameter substantially equal to that of the cylinder (26) which is arranged with a very small gap on the same shaft as the cylinder (26) and holds a magnetic head (37) so that a magnetic tape is helically wound and fed thereon, a pump-out type of spiral group (25) is formed on part or all of the periphery of either of the surfaces of the opposed rotary unit formed between the cylinder (26) and the rotary member (24), a floating force due to pneumatic pressure is generated, not only on the rotary cylinder, but also on the stationary cylinder so that the feeding of the magnetic tape is stable and smooth, thereby basically eliminating the phenomena of tape flutter and adhesion, and also tape damage or cylinder wear due to friction.

FIG.7

SPECIFICATION

Title of the Invention

Rotary Head Assembly

Technical Field

The present invention relates to a rotary head assembly of video tape recorder (hereinafter abbreviated VTR) and particularly, provides a rotary head assembly in which the tape is floated up over the cylinders by producing a dynamic pressure from pump-out type spiral grooves, so that the tape travel load due to the sliding friction of the tape, tape damage and further, the wear of the cylinders themselves may be releaved, to stabilize the tape travel, thereby enabling recording and playback of high quality picture images with high reliability.

Background Art

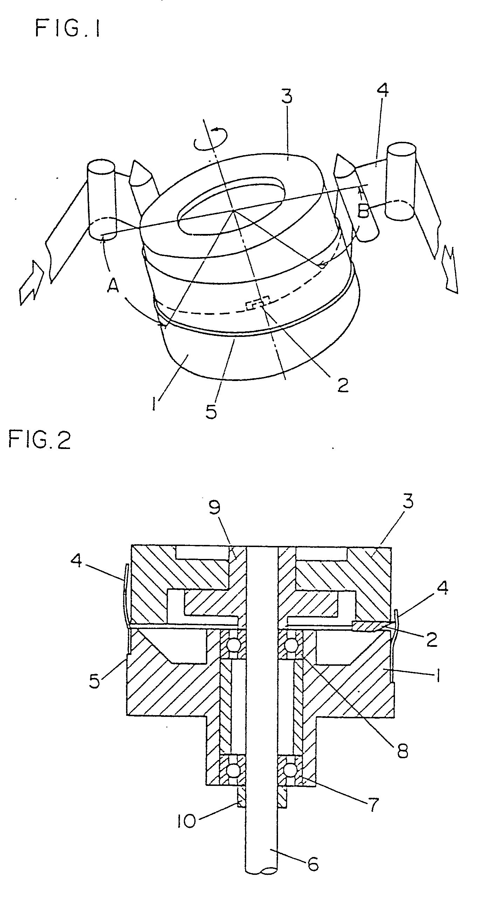

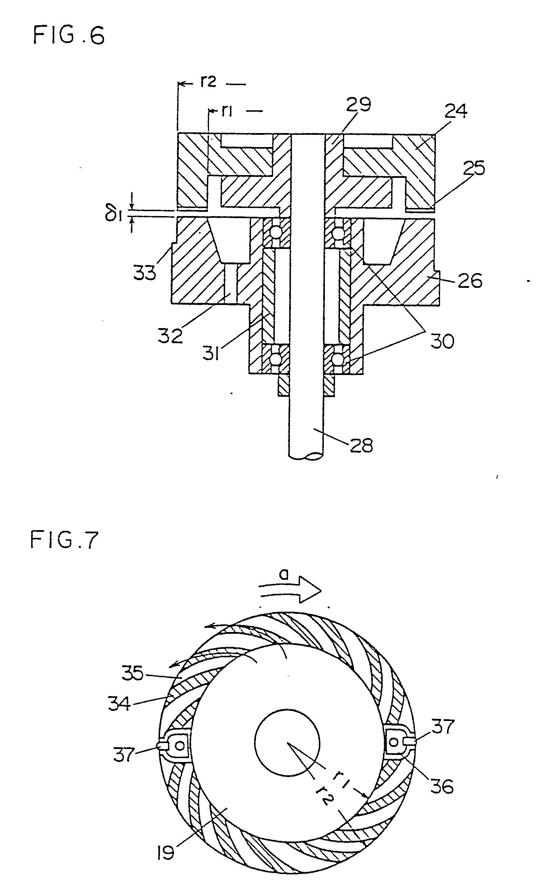

The conventional rotary head assembly of VTR is, as shown by its particular form in FIG. 1, composed of a fixed cylinder 1 and a rotary member 3 carrying a magnetic head 2, which has a cylindrical part having a nearly equal diameter to that of the aforementioned cylinder 1, is rotatably installed coaxially and adjacent to the aforementioned fixed cylinder 1. The magnetic tape 4 is wound around this rotary head assembly, to run at a

- 1 -

constant speed. Numeral 5 designates a stepped part (hereinafter referred to as lead) which regulates the running position in the width direction of a magnetic tape 4. The magnetic head 2 rotates at 1,800 rpm to perform recording and playback with the magnetic tape. FIG. 2 illustrates in a sectional view a conventional composition of the aforementioned rotary head assembly. Referring to FIG. 2, 6 denotes rotary shaft, which is rotatably supported by bearings 7 and 8 and rotationally driven by a drive motor (not shown in this view). The magnetic head 2 is fixed on the rotary shaft 6 through a member 9, to rotate at a specified speed. The fixed cylinder 1 is securely mounted on VTR base. Numeral 10 designates a bearing holding ring.

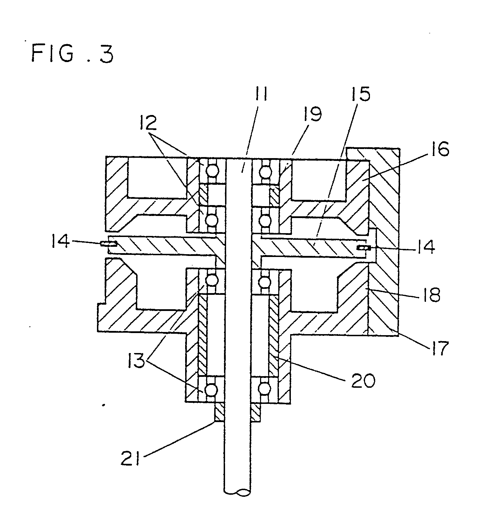

FIG. 3 gives a sectional view of a conventional rotary head assembly of different type from that of FIG. 2.

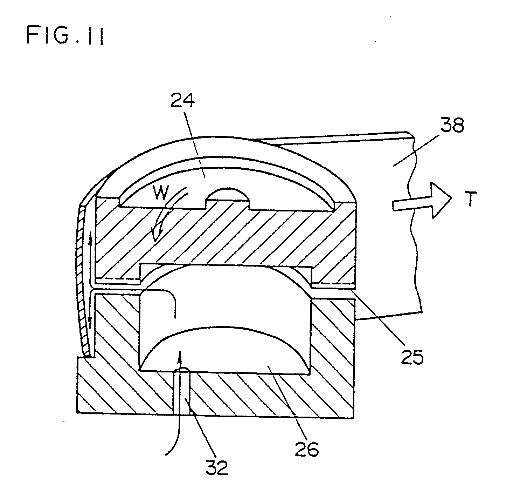

Referring to FIG. 3, 11 denotes a rotary shaft, which is rotatably supported by bearings 12 and 13 and is rotationally driven by a drive motor (not shown in this figure). The magnetic head 14 is fixed to the rotary shaft 11 through a rotary member 15, to be rotated at a specified speed. Upper stationary cylinder 16 is coaxially coupled with lower stationary cylinder 18 through a member 17 and the lower stationary cylinder 18 is further affixed onto base of VTR. Numerals 19 and 20 show collars and 21 indicates bearing holding ring.

The magnetic tape which travels about a rotary head assembly such as described above partially makes sliding contact with the rotary head assembly. At this time, its contact surface pressure on the stationary cylinder surface is 5 ~ 50g G/cm$^2$ on the average, being determined by the tape tension. The running speed of the magnetic tape shall be on the order of 1 ~ 10 cm/sec under the recording and playback mode.

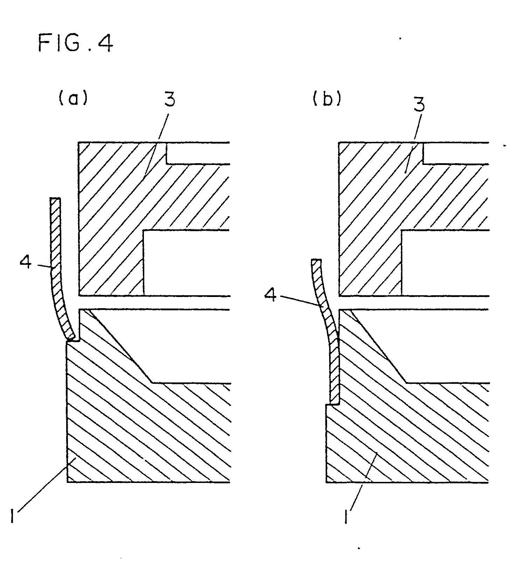

FIGS. 4 a and b show in simulation the results of actual observation of the posture of the magnetic tape when it is running on the conventional rotary head assembly shown in FIG. 2. The magnetic tape, being very highly deformable, does not show uniform beformed state on the rotary head assembly, but its deformed state varies greatly from place to place. Thus at the part (part A in FIG. 1) near the tape intake to the rotary head assembly, the whole breadth of the magnetic tape is floating up several microns ~ several tens microns over the rotary head, as shown in FIG. 4 a, due to the dynamic pressure arising between the rotary member and the magnetic tape and to the squeezing effect of the protrusion of the magnetic head and it is only on the lead of the lower cylinder that the tape makes contact sliding. However, at the part (part B in FIG. 1) near the tape take-out, the pressure for getting the magnetic tape floated up due to the aforementioned dynamic pressure and squeezing effect is reduced because of the gradually growing tape tension in the running length direction of the magnetic tape over the rotary head assembly; as a result, the tape will make contact sliding r... on the lower cylinder. Besides, the magnetic head w. ..., performs the recording and playback of the picture signals makes a contact sliding at a high speed of about cm/sec under a specified contact pressure on the magnetic tape.

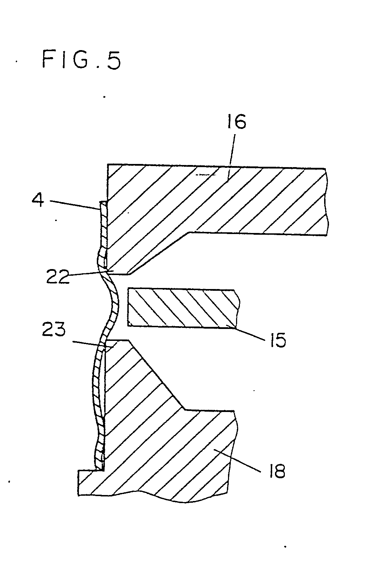

FIG. 5 shows in simulation the posture of the magnetic tape when it is running over the conventional rotary head assembly shown in FIG. 3. As shown in FIG. 5, because the magnetic tape 4 is highly deformable, it does not show uniform contact state on the outer circumferences of the upper and lower stationary sylinders, but its contact state varies greatly from place to place. Thus at the lower edge 22 of the upper stationary cylinder and at the upper edge 23 of the lower stationary cylinder, locally harsh contact state is produced, as shown in the figure.

The magnetic tape runs over the rotary head assembly under a complex dynamic state as hereabove-described. Problems arising out of this situation are summed up as hereunder:

(1) A tape swishing phenomenon due to its contact sliding on the stationary cylinder, being a frictional vibration, a kind of self-excited vibration which may sometimes be induced by the contact sliding of the magnetic tape on the stationary cylinder. The conditions for the inducement of this vibration are greatly influenced by the tape tension, surface property of the tape and the cylinder or the ambient humidity. The basic form of the vibration is the vertical vibration of the tape, which will bring about color spot and jitter of VTR and on extreme occasions, produce sharp sounds (several hundres $\sim$ several thousands Hz).

(2)  A phenomenon of the tape adhering on the stationary cylinder.  Generally, the magnetic tape surface is quite smooth, its roughness being on the order of several hundres $\overset{\circ}{A}$.  Moreover, the cylinder surface is composed of a smooth surface (surface roughness 0.1S $\sim$ 1S) for avoidance of causing tape damage.  When such quite smooth two surfaces are brought in contact with each other, generally both parties will stick to each other.  In the tape running system of VTR, this is revealed as a phenomenon of the magnetic tape adhering on the rotary head assembly, particularly, on the outer circumference of the stationary cylinder and, as a result, the magnetic tape will fall in the state of inability to run.  This tends to occur in a humid

- 5 -

atmosphere.

(3) Occurrence of tape damage and wear due to friction between each part of the rotary head assembly and the magnetic tape. As hereabove described, the magnetic tape and the rotary head assembly are making contact sliding under a surface pressure of 5 ~ 50 g G/cm$^2$ on the average; this causes wear of the surface of the rotary head assembly on which the tape runs and also wear of the magnetic tape surface and stripping of the magnetic body. Particularly, the abrasion of the magnetic tape or tape damage will not only cause loss of magnetic record signals, but the removed magnetic body will accelerate wear of every sliding part and further, accumulate in the head gap part of the video head, causing blinding and, consequently, incapacity of the recording and playback functions themselves. Particularly, the cylinder wear or tape damage is conspicuous at the lower and the upper edges of the stationary cylinders where still harsher slinding state is apparent. Such problems all basically result from the contact sliding of the magnetic tape on the rotary head assembly.

On the other hand, along with the transitory trend toward miniaturization and weight reduction of VTR, for improvement of signal recording density on the magnetic tape, conversion is under way from conventional tapes on which magnetic powder of iron oxide or chromium dioxide is coated together with resin binder to employment of the so-called alloy tapes or vapor deposited tapes as magnetic tapes. In contrast to the conventional magnetic surface which is formed of resin and magnetic powder, the tape's magnetic surface of these new tapes is really a metal surface; the coefficient of friction in its sliding on stainless steel rises from the usual order of 0.2 to the order of 0.5. Accordingly, the aforementioned problem at the rotary head assembly resulting from the sliding of the magnetic surface which makes sliding contact thereon should be still more highlighted than in conventional tapes.

In this situation, the present inventors have already proposed a new type rotary head assembly of the composition shown in FIGS. 6 ∿ 7 to overcome the aforementioned difficulties. The invention has been such that the spiral grooves 25 provided in the specified part of the rotary member 25 operate, along with the rotation of the rotary member 24, to produce a dynamic pressure and, as a result, the tape floats up such a very minute distance as about 5 ∿ 10µm over the rotary member 24 and the stationary cylinder 26, so that only the head 37 makes contact with the tape 4. Thus this invention has outstanding effects of ensuring stabilization of tape running, elimination of self-excited vibration, environmental resistance requirements, etc., as well as suppression of wear and deterioration of both tape and upper and lower cylinders by way of substantial amelioration of characteristic of the cylinder assembly in its sliding on tape.

However, with the cylinder head assembly of the new composition aforementioned, the problem of indistinctness of the design condition for maximum achievement of the discharge capacity of the spiral grooves is apprehended.

Disclosure of the Invention

According to the present invention, in a rotary head assembly composed of a stationary cylinder and a rotary member having a nearly same diameter as that of the aforementioned stationary cylinder and carrying a magnetic head thereon, which is arranged rotatably and coaxially to the aforementioned cylinder and with a minute gap therebetween, with the magnetic tape to be helically wound thereabout while running, pump-out type spiral grooves are provided on part or whole of either one of facing surfaces being in mutually rotating relationship of the aforementioned stationary cylinder and the aforementioned rotary member, whereby a floating-up force by the air pressure to the running magnetic tape is produced not only at the rotary

- 8 -

0117869

cylinder part but at the stationary cylinder part as well, so that stable and smooth tape running may be realized, thereby eradicating the tape swishing phenomenon or the tape adhering phenomenon and, further, the tape damage or the cylinder wear resulting from the sliding.

Brief Description of the Drawings

FIG. 1 is a perspective view of the conventional rotary head assembly of the upper cylinder rotating type;

FIG. 2 is a sectional view of the conventional rotary head assembly of the upper cylinder rotating type;

FIG. 3 is a sectional view of the conventional rotary head assembly of the upper and lower cylinder fixed type;

FIGS. 4 a and b are sectional views for explanation of the running state of tape on the rotary head assembly of the conventional upper cylinder rotating type;

FIG. 5 is a sectional view for explanation of the running state of tape on the rotary head assembly of the conventional upper and lower cylinder fixed type;

FIG. 6 is a sectional view of a rotary head assembly of the first embodiment of this invention;

FIG. 7 is a bottom view of the rotary member of the rotary head assembly of the first embodiment of this invention;

FIGS. 8, 9 and 10 are diagrams for explanation of

- 9 -

various dimensions to be set of the spiral groove;

FIG. 11 is a perspective view partly in section of the rotary head showing the operation of getting the tape floated up;

FIG. 12 is a discharge performance graph with ß as the parameter;

FIG. 13 is a discharge performance graph with as the parameter;

FIG. 14 is a partly enlarged sectional view of the rotary head assembly of the second embodiment of this invention;

FIG. 15 is a front view partly in section of the rotary head assembly showing the composition of the spiral grooves in the second embodiment of this invention;

FIG. 16 is a sectional view of the rotary head assembly in the third embodiment of this invention;

FIG. 17 is a sectional view of the rotary head assembly in the fourth embodiment of this invention;

FIG. 18 is a bottom view of the upper stationary cylinder in the fourth embodiment of this invention;

FIG. 19 is a sectional view of part of the rotary head assembly in the fourth embodiment of this invention;

FIGS. 20 and 21 are sectional views of the rotary head assemblies where the facing surfaces on which the spiral grooves are provided are formed conical and cylindrical, respectively, in the fourth embodiment of this
invention;

FIG. 22 is a top view of the lower stationary cylinder
of the rotary head assembly in the fifth embodiment of this
invention; and

FIGS. 23 and 24 are perspective views of the rotary
head assembly in the sixth embodiment of this invention.

The Most Preferable Mode for Exercising the Invention

In the following, several embodiments of this invention
are described with reference to the accompanying drawings:

The composition and the configuration of the first
embodiment of this invention are shown in FIGS. 6 ∿ 7.
This assembly is similar as the one already proposed by the
present inventors. Following specified numerals are
additionally indicated for various dimensions which determine
the configuration of the spiral grooves provided in the
rotary member 24.

Herein mention is made of the configuration of the
spiral grooves indispensable for obtaining the necessary
pressure for getting the tape floated up a specified
distance in definance of the tape tension (roughly 5 ∿ 50 g G).
loaded thereon.

FIG. 6 is a sectional view of a rotary head assembly
with spiral grooves of pump-out type provided on the surface of the rotary member 24 which is perpendicular to the rotary shaft 28 and facing the stationary cylinder 26. Referring to FIG. 6, 29 denotes disc, 30 ball bearings, 31 collar which fixes the ball bearings by applying prepressure, 32 a hole communicating between the space inside the rotary head assembly and its outside, and 33 the lead.

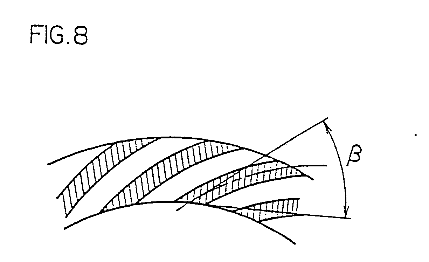

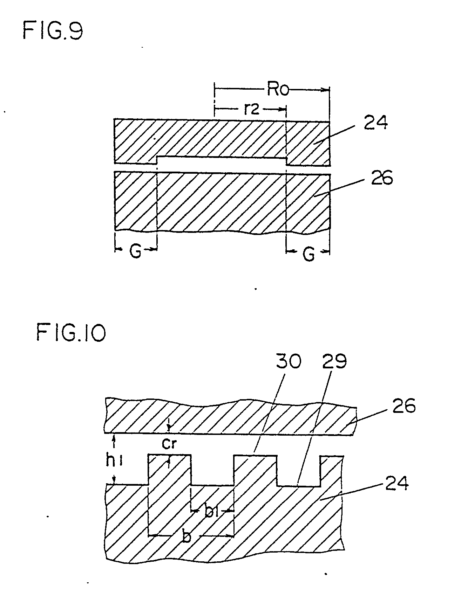

FIG. 7 shows the configuration of the horizontally facing type radial spiral grooves provided on the rotary member 24 in the rotary head assembly of the first embodiment of this invention, the black part 34 representing grooves, and the white part 35 lands (the generality of the invention will not be lost even if the radial spiral groove are provided on the lower cylinder side). Referring to FIG. 7, 36 denotes head base, and 37 magnetic head, with the arrow a showing the turning direction of the rotary member 24. The slope angle $\beta$ of the groove is defined as shown by FIG. 8 and other various dimensions which set the spiral grooves are defined as shown in FIGS. 9 ∿ 10, with G representing the zone where to provide the spiral grooves. As nondimensional amounts, the groove width ratio, groove depth ratio Hg and the ID ratio $\bar{r}_i$ are respectively defined by the following formulae:

$$\gamma \equiv b_1/b , \quad \overline{Hg} \equiv C_r/h_1 , \quad \bar{r}_i \equiv r_i/R_O$$

At this time, the internal pressure $\bar{P}$ of the radial spiral grooves which is produced when the spiral grooves have moved at a relative rotational angular velocity of ω to the facing surface will be given by the following formula, with the suction side cavity part pressure assumed to be one atmospheric pressure:

$$\overline{P} = \frac{C_s f_s}{2 f_r} \cos\beta (\overline{r}^2 - 1) + (1 - \overline{P}_O) \frac{\ell_n \overline{r}}{\ell_n \overline{r}_i} + P_O + \frac{C_s f_s}{2 f_r} \cos\beta (1 - \overline{r}_i^2) \frac{\ell_n \overline{r}}{\ell_n \overline{r}_i}$$

$$\ldots \ldots \ldots \ldots \ldots \quad (1)$$

where

$$
\begin{cases}
\overline{r} = R/R_O, \quad \overline{r}_i = r_i / R_O, \quad \overline{P} = P/P_a, \quad \overline{P}_O = P_O / P_a \\[2mm]
f_r = \dfrac{\overline{h}_1^3 \overline{h}_2^3 + \overline{b}_1 (1 - \overline{b}_1)(\overline{h}_1^3 - \overline{h}_2^3)^2 \sin^2\beta}{(1 - \overline{b}_1)\overline{h}_1^3 + \overline{b}_1 \overline{h}_2^3} \\[3mm]
f_s = \dfrac{\overline{h}_1^3 - \overline{h}_2^3}{(1 - \overline{b}_1)\overline{h}_1^3 + \overline{b}_1 \overline{h}_2^3}, \quad C_s = \dfrac{6 \mu\omega R_O^2}{P_a C_r^2} \overline{b}_1 (1 - \overline{b}_1)\overline{\delta}\sin\beta \\[3mm]
\overline{h}_i = h_i / C_r \ (i = 1, 2), \quad \overline{b}_1 = b_1 / b, \quad h_2 = C_r
\end{cases}
$$

with Pa representing the atmospheric pressure and $P_O$ the discharge port pressure.

As rewriting the aforementioned formula (1), with the stable floating-up condition given by the condition where,

- 13 -

0117869

as shown in FIG. 11, the tape 38 gets floated up by the air pressure produced by the spiral grooves 25 and the tension T applied to the tape 38 and the dynamic pressure produced by the spiral grooves 25 are balanced, the following expression is obtained:

$$\overline{P}_O - 1 = \frac{A\,(\,1 - \overline{r}_i{}^2\,)\,\gamma\,(\,1 - \gamma\,)\,(\,1/Hg - 1)(1/Hg^3 - 1\,)\sin\beta\,\cos\beta}{2\,|\,1/Hg^3 + \gamma\,(1 - \gamma\,)(1/Hg^3 - 1\,)^2\sin\beta\,|}$$

$$\cdots\ \cdots\ \cdots\ \cdots\ \cdots \quad (2)$$

In the formula (2), the left side may be regarded as a term corresponding to the tape tension, while the right side gives the discharge pressure determined by the configuration of the radial spiral grooves. Accordingly, the optimized design may be achieved by so determining the nondimensional quantity that the right side become a maximum. In the formula (2), A denotes a nondimensional quantity called bearing constant, which may be expressed by $A = 6\mu\omega R_o{}^2/P_a C_r{}^2$, using the coefficient of kinematic viscosity of air. The code $\overline{r}_i$ gives a quantity determined from the restrictions on the design dimensions inside the rotary head assembly. Accordingly, the dimensions in ranges where no restrictions are imposed on actual design may be determined by so choosing γ, ß and Hg that the term S

- 14 -

indicated by the formula (3) will be maximized:

$$S = \frac{\gamma(1-\gamma)(1/Hg-1)(1/Hg^3-1)\sin\beta\cos\beta}{1/Hg^3+\gamma(1-\gamma)(1/Hg^3-1)^2\sin^2\beta} \quad \dots \dots \dots (3)$$

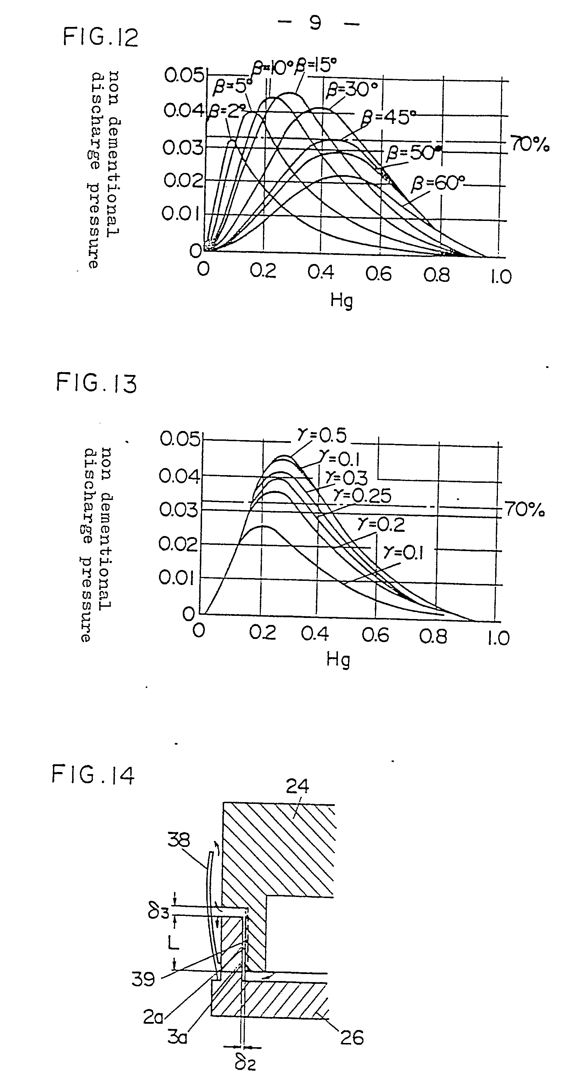

As made evident by partially differentiating the formula (3) by $\gamma$, S will take a maximum value at $\gamma = 0.5$. FIG. 12 illustrates the calculation results, plotting Hg on the abscissa and a nondimensional amount of discharge pressure on the ordinate, with ß as a parameter, when $\gamma = 0.5$. When ß is 15°, the discharge pressure gives the maximum value. As ß approaches 0°, the rising curve to the peak becomes sharp, but the discharge pressure declines and the setting width condition for Hg becomes narrow. On the other hand, if ß is chosen larger, the setting width condition for Hg may be taken in wide ranges, but the discharge pressure likewise falls.

The maximum discharge pressure produced by the spiral grooves as the pressure which is able to cope with the tape tension (approx. 5 ~ 50 g G) is roughly calculated to be nearly on the same order as the pressure corresponding to the tape tension, when the calculation formula (2) is used. Particularly, when the set value for the tape tension is on the order of 50 g G, for proper discharge pressure to be produced by the spiral grooves, at least 70% of the maximum discharge pressure needs to be ensured, if the rotary head assembly is assumed to run at $\omega = 1800$ rpm.

Accordingly, for the composition which enables achieving a discharge pressure above 70% of the maximum discharge pressure which may be realized on the assumption or $\gamma = 0.5$ and $\beta = 15°$, the requirement is for $\beta$ to fall in the range of $2° \leqq \beta \leqq 45°$.

On the other hand, shown in FIG. 9 is a graph plotting $\beta$g on the abscissa and the nondimensional amount of the discharge pressure on the ordinate, with the groove width ratio $\gamma$ as a parameter, when $\beta$ is fixed at $\beta = 15°$.

As above indicated, to ensure having higher than 70% of the maximum discharge pressure, the requirement is for $\gamma$ to be set at a value of $0.2 \leqq \gamma \leqq 0.8$. Here the term concerning $\gamma$ in the formula (3) is expressed in the form of $\gamma(1 - \gamma)$ and $\gamma(1 - \gamma)$ takes symmetrical values, with the extreme value at $\gamma = 0.5$ as the center, and therefore, exactly same characteristic is obtained at $\gamma = 0.1$ and $\gamma = 0.9$, for example.

If either one of $\beta$ or $\gamma$ or both are set in positions where the requirements for the setting of $\beta$ and $\gamma$ are not met, the floating-yp of the tape over the rotary head assembly is not assured. Consequently, such spiral grooves, even if provided, will give no effect and become insignificant, for the cause of serving the end is quite lost.

Thus the aforementioned setting ranges are sine qua non. While as for the value of Hg, the optimum value may vary with the setting conditions for $\beta$ and $\gamma$, it shall be roughly restricted within 0.1 $\sim$ 0.5 owing to the requirements on the aforementioned setting ranges of $\beta$ and.

Parameters other than the aforementioned include the distance $\delta_1$ (hereinafter called gap) between the spiral groove surface and the surface facing it, ID ratio $\bar{r}_i$ and the relative rotational angular velocity $\omega$, etc. These parameters may be attributed to problems of pure design considerations. Thus ideally, the smaller gap $\delta_1$, the larger ID ratio $\bar{r}_i$ and the larger relative number of revolutions $\omega$ will directly contribute to improvement in the value of discharge pressure.

As hereabove described, according to this embodiment, with the setting of the groove width ratio $\gamma$ of the spiral groove in the range of $0.2 \leqq \gamma \leqq 0.8$ and that of the groove angle $\beta$ especially in the range of $2° \leqq \beta \leqq 45°$ as the necessary conditions, the floating-up of tape around the rotary head assembly under the tape tension of 5 $\sim$ 50 g G which is generally applied may be realized. Thus the capability of the spiral grooves may be positively exhibited according to this embodiment.

In the following, the second embodiment of this invention is described with reference to the accompanying

drawings:

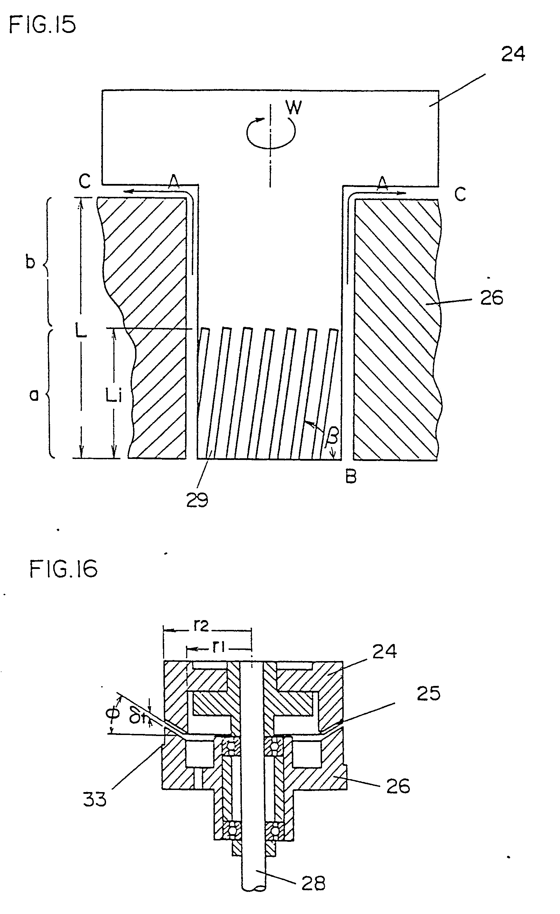

FIG. 14 shows an embodiment of the rotary head assembly of a composition in which overlapping parts of cylindrical surfaces are provided between the rotary member 24 and the stationary cylinder 26 and on one of these surfaces 39, pump-out type grooves are formed, so that the tape 38 may be floated up by the air current flowing through the clearance between the upper and the lower cylinders. For the indication of various dimensions of the groove, the description for the first embodiment is also applicable. However, the definition of the groove angle ß is changed as shown in FIG. 15 and the groove forming range width $L_1$, outside diameter and the total width L are newly defined. As shown in FIG. 15, with the rotary head assembly being of a composition including both the region indicated by a zone provided with grooved part and the region indicated by b zone not provided with grooved part and in the face of the opposing member (part of the stationary cylinder 26) located adjacent to the circumference of both regions, the grooves 34 is turned at a relative rotational angular velocity ω and, then, air will be discharged in the directions of the arrow A. Here, if the pressure at the inlet side end B is assumed to be the atmospheric pressure and the discharge pressure which is generated at the opposite side end C is set to be equal to the relative pressure of the tape tension, then, the pressure $\bar{P}_O - 1$, a non-dimensional expression of the pressure produced by the spiral grooves, is expressed by the following formula:

$$\bar{P}_O - 1 = A\left\{\frac{\gamma(1-\gamma)(1/Hg - 1)(1/Hg^3 - 1)\sin\beta\cos\beta}{1/Hg^3 + \gamma(1-\gamma)(1/Hg^3 - 1)^2 \sin\beta}\right\}\frac{L_1}{D}$$

$$\cdots \cdots \cdots \cdots \cdots \quad (4)$$

The part braced on the right side in the formula (4) is exactly identical with the value of S (formula (3)) in the description on the first embodiment.

A is, as above-described, bearing constant, which is expressed by, $A = 6\mu\omega(D/2)^2/P_a C_r^2$ .

In this embodiment also, the requirements for achieving positive floating-up of the tape over the general rotary head assembly which is to be used at a tape tension in the range of 5 ∿ 50 g G shall be $2° \leqq \beta \leqq 45°$, with regard to ß, and $0.2 \leqq \gamma \leqq 0.8$, with regard to γ. The condition for γ is optimum at γ = 0.5. With regard to the groove depth ratio, the setting shall be approximately in the range of $0.1 \leqq Hg \leqq 0.5$.

Where other setting conditions, D, $L_1$, ω and $\delta_2$ are concerned, they pose problems of purly design considerations. No doubt, the performance of the grooves themselves is improved by choosing the larger values of D, ω and $L_1$ and the smaller value of $\delta_2$.

As above-described, when an overlapped part of cylindrical surfaces is composed between the rotary and the stationary cylinders and grooves are provided on one of the surfaces, by applying the requirements of setting the groove width ratio $\gamma$ particularly in the range of $0.2 \leq \gamma \leq 0.8$ and the groove angle $\beta$ particularly in the range of $2° \leq \beta \leq 45°$, proper floating-up of the tape around the rotary head assembly, may be assured at a tape tension of $5 \sim 50$ g G being the general operating condition.

In the following the third embodiment of this invention is described with reference to the accompanying drawing.

FIG. 16 gives an embodiment being a rotary head assembly of a composition with the opposing face of the stationary cylinder 26 and the rotary member 24 formed in a conical shape, in which pump-out type grooves are provided on the cone shape surface. In this instance, the invention has been made to set the groove width ratio $\bar{r}_i$ substantially large. As already explained in the present inventors' proposal, $\bar{r}_i$ may be increased by $1/\cos\varphi$ times, thus by making proper choice of the slope angle $\varphi$. As this embodiment is examined from another point of view, it may be regarded as corresponding to the first embodiment when $\varphi = 0$ and to the second when $\varphi = 90$. Accordingly, the third embodiment embraces all conditions for values other than the above-mentioned.

In the range of $0° < \varphi < 90°$ also, exactly similar result is obtained through similar calculations as described in the first and the second embodiments. S is expressed by,

$$S = \frac{r(1-r)(1/Hg-1)(1/Hg^3-1)\sin\beta\cos\beta}{1/Hg^3+r(1-r)(1/Hg^3-1)^2\sin^2\beta}$$

For the definitions of the various dimensions for setting the grooves, the aforementioned expressions shall apply.

Thus also in this embodiment, the requirements for ensuring proper floating-up of the tape over the general rotary head assembly, the tape being used at a tension of $5 \sim 50$ g G, are $2° \leqq \beta \leqq 45°$, with regard to $\beta$, and $0.2 \leqq \gamma \leqq 0.8$, with regard to $\gamma$. Particularly, the condition for $\gamma$ is optimum at $\gamma = 0.5$.

And that the larger effect is expectable from the smaller gap and the larger ID ratio $\bar{r}_i$ and relative rotary angular velocity $\omega$, as a problem of pure design considerations, is as described hereabove. The groove depth ratio shall be set roughly in the range of $0.1 \leqq Hg \leqq 0.5$.

In the first $\sim$ the third embodiments hereabove described, a rotary head assembly of the type represented by VHS type VTR having an upper cylinder which is rotary (rotary member) and a lower cylinder which is stationary is described. To be sure this description is applicable to a

- 21 -

rotary head assembly of the type having upper and lower cylinders which are stationary and a rotary member holding the central magnetic head interposed between the aforementioned two stationary cylinders, which is rotatable. In this instance, the groove parameters may be set relative to the upper and the lower stationary cylinders, with the rotary member at the center between them, to the performance benefit, whatever value of $\varphi$ is chosen between 0 $\sim$ 90°.

The aforementioned description is applicable to all cases where grooves are provided in any arbitrary part composed to produce relative velocities in the rotary head assembly.

In the following, the fourth embodiment is described with reference to an accompanying drawing:

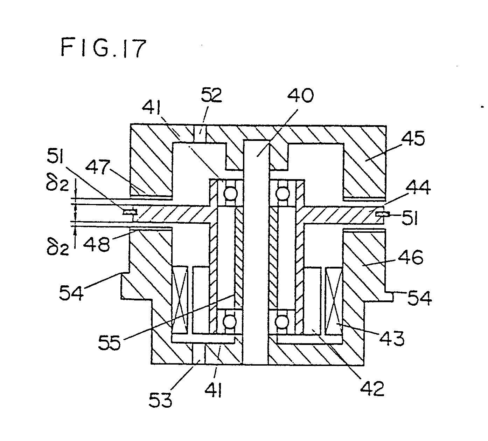

FIG. 17 is a sectional view of a rotary head assembly of the fourth embodiment of this invention. Referring to FIG. 17, 40 denotes stationary shaft; 41, bearings; 42 and 43, a magnet and a coil which compose the direct drive motor which gives rotary drive to the rotary member 44, with pump-out type spiral grooves 47 and 48 provided on the lower end surface and the upper end surface respectively of the upper stationary cylinder 45 and the lower stationary cylinder 46.

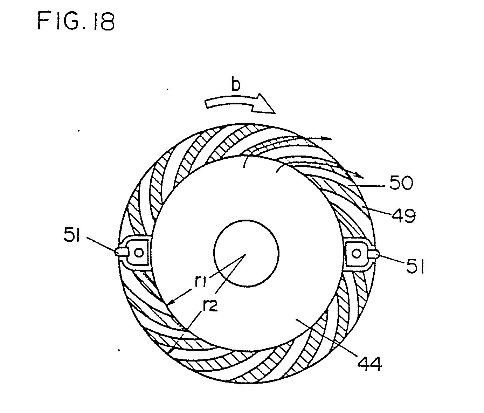

The disc part of the rotary member 44 is so composed as to turn between the upper and the lower stationary cylinder end surfaces with a minute clearance δ therebetween. The pattern of the spiral grooves 47 and 48 is, as roughly shown in FIG. 18, formed in a radial spiral shape on the bottom surface of the upper stationary cylinder with its inside radius $r_1$ and its outside radius $r_2$. In this figure, the hatched parts 49 represent the groove parts, while the other blank parts 50 show the land parts. Relative to the upper stationary cylinder 45, the upper surface of the disc part of the rotary member 44 carrying the rotary head 51 turns at a high velocity and with a minute clearance $\delta_2$ therebetween, whereby the air in the interior of the rotary head assembly is discharged to outside through the minute clearance $\delta_2$ by hydrodynamic action. In FIG. 18, the arrow b indicates the turning direction of the rotary member 44. The shape of the spiral grooves 48 on the upper end surface of the lower stationary cylinder must naturally be reversed in the spiral direction from the shape of the spiral grooves 47 of FIG. 18 formed on the upper stationary cylinder. Numerals 52 and 53 designate holes for communication between the in- and out-sides of the rotary head assembly. When discharging the air inside the rotary head assembly to the outside by means of the aforementioned spiral grooves, the internal air pressure will drop and, as a result, the discharge air flow at the specified flow rate can not be obtained, if the interior of the rotary head assembly is of an airtight structure. These holes are provided for avoidance of this failure. They must be designed to have as large an opening section as possible. Numeral 54 designates lid, and 55 collar.

With the composition of the rotary head assembly of this embodiment, the air discharged to outside through the spiral grooves gives a floating-up force to the magnetic tape and forms a uniform air film all over the part where the magnetic tape slides over the circumferential surface of the rotary head assembly, thereby averting the sliding contact between the magnetic tape and the rotary head assembly. In that way stable and smooth tape running is realized.

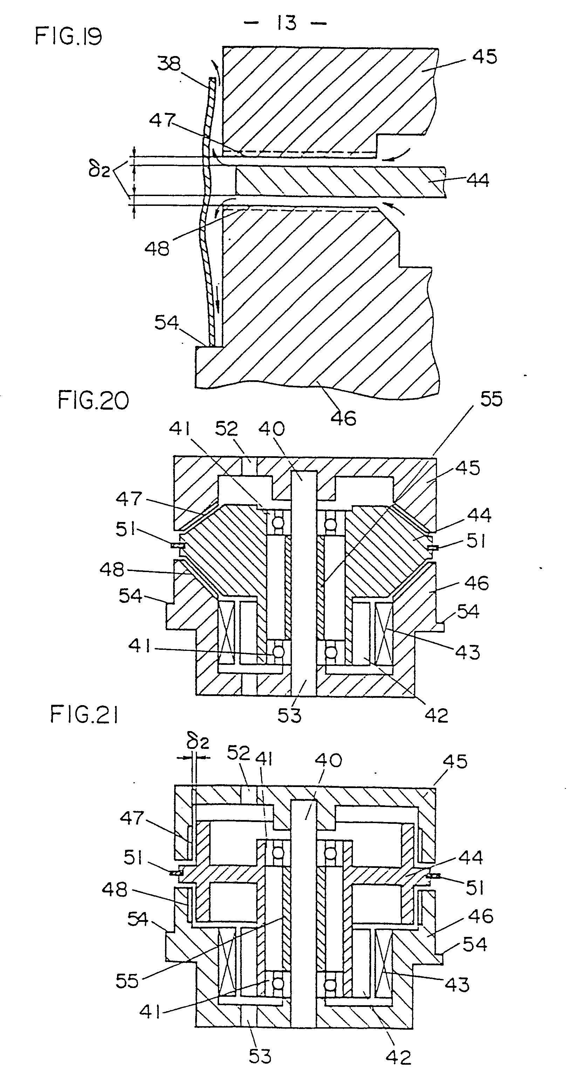

The principle for attaining the improvement in the performance of the tape running in the embodiments of this invention is described in detail hereunder: FIG. 19 gives a sectional view of part of the rotary head assembly of the fourth embodiment of this invention. The spiral grooves 47 and 48 produce air flows, as shown by the arrows in this figure, as the rotary member 44 turns.

While in the embodiment of FIG. 17, the spiral grooves are formed on the end surfaces of the upper and the lower stationary cylinders, it is obviously proper to form in a conical shape the end surfaces of the upper and the lower

0117869

stationary cylinders 45 and 46 and form the spiral grooves thereon, as shown in FIG. 20. This composition is particularly effective in making the effective area of the spiral groove large.

It is also evidently proper to provide the spiral grooves in the cylindrical parts between the upper and the lower stationary cylinders 45 and 46 versus the rotary member 44, as shown in FIG. 21.

Further it is equally appropriate to provide the spiral grooves on the rotary member 44 side, although in all aforementioned embodiments (FIGS. 17, 20 and 21), they are formed in the upper and the lower stationary cylinder sides.

In the following, the fifth embodiment of this invention is described with reference to the accompanying drawings:

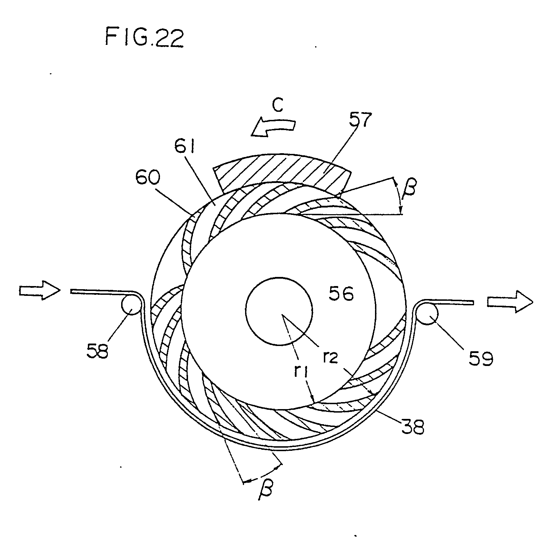

The section of the rotary head assembly of the fifth embodiment of this invention is similar as that shown in FIG. 17. FIG. 22 displays the top view of the lower stationary cylinder 56, showing the pattern of the sprial groove 48. Numeral 57 designates a supporting member and 58 and 59 stand for guide posts for regulating the winding angle of the magnetic tape 38.

The arrow mark c indicates the tunring direction of the rotary member. The spiral grooves are formed in the

- 25 -

ring shape end surface surrounded by two concentric circles with radii $r_1$ and $r_2$, the hatched parts 60 showing grooves, and the blank parts 61 land par-s. As shown in FIG. 6, the setting angle $\beta$ for the spiral grooves is formed as pump-out type spiral grooves in the region where they face the magnetic tape 38, but as pump-in type spiral grooves in the region where they do not face it.

With regard to spiral grooves formed on the bottom surface of the upper stationary cylinder 45, when the fifth embodiment of this invention is applied to the rotary head assembly of the type having upper and lower cylinders which are stationary, the pump-out type spiral groove is formed on the part of the end surface where the cylinder faces the magnetic tape 38, but the pump-in type is formed on the other part of the end surface and the detail dimensions are the same as the above set values.

The operation of the rotary head assembly composed as hereabove described is described hereunder: Referring to FIG. 22, as the rotary member 44 turns in the direction indicated by the arrow mark c, along the pump-in type sprial grooves fromed in the region where the cylinder does not face the magnetic tape 38, air outside the cylinder is sucked into the cylinder interior through the gap $\delta_2$ between the cylinder end and the rotary member 44. On the other hand, along the spiral grooves of the pump-out type formed in the region where the cylinder faces the magnetic tape 38, air in the interior of the cylinder is blown out to the outside of the cylinder through the gap $\delta_2$ between the end of the cylinder and the rotary member 44. Thus air outside the cylinder is sucked into the internal space of the cylinder and again blown out to the outside of the cylinder. Now the air pressure in the internal space of the cylinder is considered: Since the magnetic tape 38 exerts the action of preventing air in the internal space of the cylinder from being blown out to the outside, the amount of air sucked into the interior of the cylinder is larger than the amount of air blown out to the outside, the amount of air sucked into the interior of the cylinder is larger than the amount of air blown out in the case of this embodiment in which the spiral grooves of the pump-in type and those of the pump-out type have nearly equal lengths (the winding angle of the magnetic tape of VTR is 190° ∿ 220°). For this reason, the air pressure in the internal space of the cylinder is higher than the external air pressure, so that the amount of air blown out of the internal space of the cylinder may be set larger, as compared with the cylinder in which the spiral grooves of pump-out type only are provided.

As hereabove described, by setting the amount of air sucked in through the spiral grooves of pump-in type larger than the amount of air blown out through the spiral grooves of pump-out type, thereby increasing the amount of air blown out, it is possible to exert proper floating-up force on the magnetic tape and to form a uniform air film all over the part of the circumferential wall surfaces of the upper stationary cylinder 45 and the lower stationary cylinder 46 on which the magnetic tape slides. In that way, the sliding contact between the magnetic tape 38 and the rotary head assembly may be averted, thereby realizing stable and smooth running of tape.

While in the foregoing, application of the fifth embodiment to the upper and lower cylinder stationary type shown in FIG. 17 is shown, forming of the spiral grooves shown in FIG. 22 on the top end of the lower stationary cylinder 26 of the upper cylinder rotating type rotary head assembly shown in FIG. 6 has, of course, similar effect.

In the following, the sixth embodiment of this invention is described with reference to an accompanying drawing:

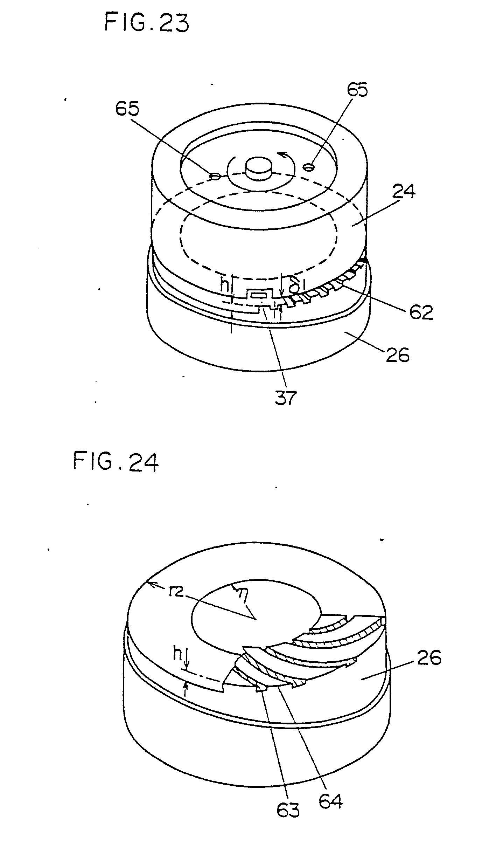

FIG. 23 is a perspective view of the rotary head assembly of the upper cylinder rotating type shown in FIG. 6 to which the sixth embodiment of this invention is applied.

Referring to FIG. 23, 62 denotes spiral grooves of pump-out type formed in part of the end surface of the stationary cylinder 26 which faces the rotary member 24.

It should be noted that some relief h is provided.

FIG. 24 is a perspective view of the stationary cylinder for explanation of the spiral grooves. On its end surface, the aforementioned spiral grooves 62 are locally provided, which are composed of groove parts 63 and land parts 64 formed radially and spirally in the region surrounded by a hollow cylinder with its inside radius $r_1$ and its outside radius $r_2$.

In the following, operation of the rotary head assembly composed as hereabove-described is described:

As the rotary member 24 arranged at a minute space $\delta_1$ from the stationary cylinder 26 in which spiral grooves 26 of pump-out type are locally formed is rotated at a high speed, air in the interior of the rotary head assembly is discharged to the outside through the minute space $\delta_1$ by the hydrodynamic action. By taking advantage of the discharge air flow due to this pressure difference, the floating up running of the magnetic tape which runs over the rotary head assembly is induced and the contact sliding of the magnetic tape on the stationary cylinders, particularly, near its exit, is thereby averted. Numeral 65 in FIG. 23 designates holes which communicate between the interior of the rotary head assembly and the exterior. If the interior of the rotary head assembly is of an air tight structure, the internal air pressure will drop, resulting in failure to obtain the discharge air current
at a specified flow rate, when discharging air in the
interior of the rotary head assembly to the exterior.
These holes have the function of averting this and,
therefore, they must be designed to have the largest
possible opening section. The air pressure produced due
to the set arrangement of spiral grooves is greatly
influenced by how the groove setting dimensions are chosen.
Among such factors, the setting of the minute space $\delta_1$ has
especially large bearing on the discharge performance of
the spiral grooves.

On the other hand, the space between the rotary member
and the stationary cylinder is influenced by the working
accuracy as well as by the assembling accuracy. For
example, if the spiral grooves are formed on the over-all
circumference of the stationary cylinder, it is vertually
impossible to hold the minute space $\delta_1$ uniform between it
and the surface facing it. For this reason, the place
where a maximum discharge pressure is required and,
accordingly, $\delta_1$ is desired to be as small as possible and
the actual position where the minute space $\delta_1$ is minimum
do not necessarily coincide with each other.

When spiral grooves are locally provided, according
to this invention, it is proper to control $\delta_1$ of only the
part where the spiral grooves are provided. In other part, because of the relief h, the contact sliding phenomenon
resulting from the working error, etc., between the facing
surfaces outside the region where the spiral grooves are
provided may be averted. From inverse stand-point, in the
rotary head assembly having spiral grooves which intrinsically
require strict working accuracy, it is possible to achieve
the merit of ensuring effective discharge pressure at
necessary positions, while permitting rough working
accuracy of the rotary head assembly by locally providing
the spiral grooves, as in the aforementioned composition,
and forming relief in the other part.

Accordingly, in order to make $\varepsilon_1$ as small as possible,
the smaller the part where the spiral grooves are provided,
the better. The relief h is adequate at several tens $\sim$
several hundreds μm, but even in a special case of h = 0,
the assembly will not be incapacitated. In the present
rotary head assembly, the running posture of tape is such
that the magnetic tape on the stationary cylinder makes
contact sliding in the vicinity of the tape exit side and
the effect of locating local spiral grooves in this part
will be enormous. Provision of spiral grooves will be
effective, if done on part or whole of the half of the
latter half of the total winding angle of the magnetic tape
wound around the rotary head assembly.

As described in the foregoing, according to this

- 31 -

embodiment, by way of locally providing spiral grooves on the surface of the stationary cylinder, making the minute space $\delta_1$ as small as possible and providing a relief in the region where the spiral grooves are not formed, it is possible to supply adequate discharge pressure at the necessary positions, thereby getting the magnetic tape efficiently and positively floated up over the rotary head assembly for a minute distance. Accordingly, smooth and stable running of the magnetic tape and stable recording and playback of signals may be achieved.

In the sixth embodiment, the explanation has been taken with local spiral grooves placed on the horizontal surface of the stationary cylinder facing the rotary member. However, this will be effective, if the grooves may be provided on the stationary cylinder side, wherever mutually facing surfaces have a relative velocity. Accordingly, it is not doubt proper to provide the spiral grooves on a tapered surface or on a vertical surface where relative velocity is available owing to the structure of the rotary head assembly to utilize.

Besides, as a composition of the aforementioned rotary head assembly, similar composition of spiral grooves may be contemplated with regard to the type shown in FIG. 17 having a disc shape rotary member carrying the head placed between the facing surfaces of the two cylindrical stationary members with approximately same diameters and coaxially arranged. Particularly in this instance, by locally providing spiral grooves on both upper and lower stationary cylinders, the discharge wind pressure produced between these grooves and the rotary member may be greatly increased.

Industrial Applicability

As hereabove described, the rotary head assembly of this invention will be utilized as a rotary head assembly in which the floating-up force by air pressure on the running magnetic tape is produced not only over the rotary cylinder but over the stationary cylinder(s) as well, to assure stable and smooth tape running, eradicating the tape swishing phenonmenon and, further, tape damage and wear resulting from its contact sliding, thereby enabling recording and playback of high quality picture images to be made with high reliability.

What is claimed is:

1. A rotary head assembly composed of a stationary cylinder and a rotary member carrying a magnetic head with approximately same diameter as that of this stationary cylinder and placed adjacent to and coaxially with the aforementioned stationary cylinder, with pump-out type spiral grooves formed in part or whole of either one of the mutually facing and relatively rotating surfaces of the aforementioned stationary cylinder or the aforementioned rotary member, wherein the groove angle ß defined as the angle of the slope between the central line of a spiral groove and the tangent to an arbitrary concentric circle within the set range where the spiral grooves are provided and drawn through the intersection between said concentric circle and said central line of the spiral groove is set at $2° \leq ß \leq 45°$ and in the pattern of the part where the spiral grooves are provided or groove part and the part where they are not or land part being alternately placed, the groove width ratio γ defined by dividing the width of the groove part by the total of the width of one set of the groove part and the land part, to have a nondimensional amount, is set in the range of $0.2 \leq γ \leq 0.8$.

2. A rotary head assembly composed of a pair of stationary cylinders arranged coaxially and axially spaced from each other and a rotary member carrying a magnetic head which is placed in the aforementioned specified space, projecting to outside from the outer circumferencial surfaces of the aforementioned stationary cylinders and coaxially and rotatably placed relative to the aforementioned pair of stationary cylinders, the aforementioned pair of stationary cylinders having surfaces facing the outside surfaces of the aforementioned rotary member at a minute space, with spiral grooves of pump-out type adapted to discharge air from the internal space to outside provided on part or whole of either the surface of the aforementioned rotary member or the surface of the aforementioned pair or stationary cylinders.

3. A rotary head assembly according to the calim 2, wherein the groove angle ß defined as the angle of the slope between the central line of a spiral groove and the tangent to an arbitrary concentric circle within the set range where the spiral grooves are provided and drawn through the intersection between said concentric circle and said central line of the spiral groove is set at $2° \leq ß \leq 45°$ and in the pattern of the part where the spiral grooves are provided or groove part and the part where they are not or land part being alternately placed, the groove width ratio γ defined
by dividing the width of the groove part by the total
of the width of one set of the groove part and the land
part, to have a nondimensional amount, is set in the
range of 0.2 ≤ γ ≤ 0.8.

4. A rotary head assembly according to Claim 1 or 2,
wherein the groove depth ratio Hg defined by dividing
the distance to the land from the surface facing the
part on which the spiral grooves are provided as the
reference by the distance to the bottom of the spiral
groove, to have a non-dimentional amount, is set at
0.1 ≤ Hg ≤ 0.5.

5. A rotary head assembly according to Claim 1 or 2,
wherein the facing surfaces comprise the end surface
of the orbicular part of the aforementioned stationary
cylinder and the end surface of the orbicular part of
the aforementioned rotary member.

6. A rotary head assembly according to Claim 1 or 2,
wherein the facing surfaces comprise the inner circumferential surface of the cylindrical part of the aforementioned stationary cylinder and the outer circumferential surface of the cylindrical part of the
aforementioned rotary member.

7. A rotary head assembly according to Claim 1 or 2,
wherein the stationary cylinders and the aforementioned rotary member have mutually engaging conical parts and the aforementioned facing surfaces comprise the aforementioned conical parts.

8. A rotary head assembly according to Claim 1 or 2, wherein the spiral grooves are formed by clining.

9. A rotary head assembly according to Cliam 1 or 2, wherein also on the outer circumference of the rotary member, there are provided spiral grooves continuously extending from the top to the bottom of the aforementioned outer circumference.

10. A rotary head assembly according to Claim 1 or 2, wherein at least one or more holes which communicate between the interior and the exterior of the rotary head assembly are provided through the stationary cylinders or the aforementioned rotary member.

11. A rotary head assembly according to Claim 1 or 2, wherein spiral grooves of pump-out type are provided on the region which is enveloped by the magnetic tape of the aforementioned stationary cylinder side surface, of the facing surfaces, and spiral grooves of pump-in type are provided on the region which is not enveloped by the aforementioned magnetic tape.

12. A rotary head assembly according to Claim 1 or 2 wherein spiral grooves of pump-out type are locally provided on the aforementioned stationary cylinder side surface, of the facing surfaces, and a relief is provided on the part outside the set part where the aforementioned spiral grooves are provided.

13. A rotary head assembly according to Claim 1 or 2, wherein the set position of the local spiral grooves is restricted to the latter half exit side part, of the total wrapping angle of the magnetic tape over the rotary head assembly.

FIG.1

FIG.2

FIG . 3

FIG.4

(a)                    3          (b)              3

4                                    4

|                                        |

FIG.5

FIG.6

FIG.7

FIG.8

FIG.9

FIG.10

FIG.11

FIG.12

non dementional discharge pressure

$\beta$=10° $\beta$=15°

$\beta$=5°

$\beta$=2°

$\beta$=30°

$\beta$=45°

70%

$\beta$=50°

$\beta$=60°

0.05
0.04
0.03
0.02
0.01
0

0    0.2    0.4    0.6    0.8    1.0

Hg

FIG.13

non dementional discharge pressure

$\gamma$=0.5

$\gamma$=0.1

$\gamma$=0.3

$\gamma$=0.25

70%

$\gamma$=0.2

$\gamma$=0.1

0.05
0.04
0.03
0.02
0.01
0

0    0.2    0.4    0.6    0.8    1.0

Hg

FIG.14

24

38

$\delta_3$

L

39

2a

3a

26

$\delta_2$

FIG.15

FIG.16

FIG.17

FIG.18

0117869

FIG.19    − 13 −

FIG.20

FIG.21

FIG.22

FIG.23

FIG.24

0117869

# INTERNATIONAL SEARCH REPORT

International Application No. PCT/JP83/00215

## I. CLASSIFICATION OF SUBJECT MATTER (if several classification symbols apply, indicate all) [3]

According to International Patent Classification (IPC) or to both National Classification and IPC

Int. Cl.$^3$   G11B 15/60, 15/52

## II. FIELDS SEARCHED

| Minimum Documentation Searched [4] | |
|---|---|
| Classification System | Classification Symbols |
| I P C | G11B 15/60, 15/52, 15/66, F04D 29/16 − 29/30 |

| | Documentation Searched other than Minimum Documentation to the Extent that such Documents are Included in the Fields Searched [5] |
|---|---|
| | Jitsuyo Shinan Koho                    1960 − 1983<br>Kokai Jitsuyo Shinan Koho              1971 − 1983 |

## III. DOCUMENTS CONSIDERED TO BE RELEVANT [14]

| Category* | Citation of Document, [16] with indication, where appropriate, of the relevant passages [17] | Relevant to Claim No. [18] |
|---|---|---|
| Y | JP,A, 52-24506 (Matsushita Electric Industrial Co., Ltd.) 24. February. 1977 (24. 02. 77) | 1 − 5 |
| Y | JP,A, 52-24507 (Matsushita Electric Industrial Co., Ltd.) 24. February. 1977 (24. 02. 77) | 1 − 5 |
| Y | JP,A, 56-137549 (Matsushita Electric Industrial Co., Ltd.) 27. October. 1981 (27. 10. 81) | 1 − 5 |
| A | JP,A, 50-99705 (Boris Michailovich Kostin) 7. August. 1975 (07. 08. 75) | 1 − 5, 11 |
| A | JP,A, 53-97405 (Sony Corp.) 25. August. 1978 (25. 08. 78) | 1 − 5 |
| Y | JP,Y1, 52-23929 (Matsushita Electric Industrial Co., Ltd.) 31. May. 1977 (31. 05. 77) | 1 − 5 |
| A | JP,A, 57-36458 (Matsushita Electric Industrial Co., Ltd.) 27. February. 1982 (27. 02. 82) | 1 − 5 |
| A | JP,A, 57-123555 (Matsushita Electric Industrial Co., Ltd.) 2. August. 1982 (02. 08. 82) | 6, 7, 9 |

* Special categories of cited documents: [15]
"A" document defining the general state of the art which is not considered to be of particular relevance
"E" earlier document but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step
"Y" document of particular relevance; the claimed invention cannot be considered to involve an inventive step when the document is combined with one or more other such documents, such combination being obvious to a person skilled in the art
"&" document member of the same patent family

## IV. CERTIFICATION

| Date of the Actual Completion of the International Search [2] | Date of Mailing of this International Search Report [2] |
|---|---|
| September 9, 1983 (09. 09. 83) | September 19, 1983 (19. 09. 83) |

| International Searching Authority [1] | Signature of Authorized Officer [20] |
|---|---|
| Japanese Patent Office | |

Form PCT/ISA/210 (second sheet) (October 1981)

# 0117869

International Application No. PCT/JP83/00215

| FURTHER INFORMATION CONTINUED FROM THE SECOND SHEET | | |
|---|---|---|
| A | JP,A, 58-32265 (Matsushita Electric Industrial Co., Ltd.) 25. February. 1983 (25. 02. 83) | 1 - 5, 10 |
| A | JP,A, 54-69637 (Matsushita Electric Industrial Co., Ltd.) 4. June. 1979 (04. 06. 79) | 1 - 5 |
| A | JP,A, 56-22215 (Matsushita Electric Industrial Co., Ltd.) 2. March. 1981 (02. 03. 81) & DE,A1, 3001432 & FR,A1, 2446953 & GB,A, 2043182 | 6, 9 |
| A | JP,U, 51-101908 (Hitachi Denshi, Ltd.) 16. August. 1976 (16. 08. 76) | 7 |

**V.☐ OBSERVATIONS WHERE CERTAIN CLAIMS WERE FOUND UNSEARCHABLE**[10]

This international search report has not been established in respect of certain claims under Article 17(2) (a) for the following reasons:

1.☐ Claim numbers_____, because they relate to subject matter [12] not required to be searched by this Authority, namely:

2.☐ Claim numbers_____ because they relate to parts of the international application that do not comply with the prescribed requirements to such an extent that no meaningful international search can be carried out [13], specifically:

**VI.☐ OBSERVATIONS WHERE UNITY OF INVENTION IS LACKING**[11]

This International Searching Authority found multiple inventions in this international application as follows:

1.☐ As all required additional search fees were timely paid by the applicant, this international search report covers all searchable claims of the international application.

2.☐ As only some of the required additional search fees were timely paid by the applicant, this international search report covers only those claims of the international application for which fees were paid, specifically claims:

3.☐ No required additional search fees were timely paid by the applicant. Consequently, this international search report is restricted to the invention first mentioned in the claims; it is covered by claim numbers:

4.☐ As all searchable claims could be searched without effort justifying an additional fee, the International Searching Authority did not invite payment of any additional fee.

Remark on Protest

☐ The additional search fees were accompanied by applicant's protest.

☐ No protest accompanied the payment of additional search fees.

Form PCT/ISA/210 (supplemental sheet (2)) (October 1981)

0117869

International Application No. PCT/JP83/00215

| FURTHER INFORMATION CONTINUED FROM THE SECOND SHEET | | |
|---|---|---|
| A | JP,A, 56-77944 (Sony Corp.) 26. June. 1981 (26. 06. 81) | 1 - 5 |
| Y | JP,A, 51-108306 (Matsushita Electric Industrial Co., Ltd.) 25. September. 1976 (25. 09. 76) | 1, 3 |

**V.☐ OBSERVATIONS WHERE CERTAIN CLAIMS WERE FOUND UNSEARCHABLE [10]**

This international search report has not been established in respect of certain claims under Article 17(2) (a) for the following reasons:

1.☐ Claim numbers_____ because they relate to subject matter [12] not required to be searched by this Authority, namely:

2.☐ Claim numbers_____ because they relate to parts of the international application that do not comply with the prescribed requirements to such an extent that no meaningful international search can be carried out [13], specifically:

**VI.☐ OBSERVATIONS WHERE UNITY OF INVENTION IS LACKING [11]**

This International Searching Authority found multiple inventions in this international application as follows:

1.☐ As all required additional search fees were timely paid by the applicant, this international search report covers all searchable claims of the international application.

2.☐ As only some of the required additional search fees were timely paid by the applicant, this international search report covers only those claims of the international application for which fees were paid, specifically claims:

3.☐ No required additional search fees were timely paid by the applicant. Consequently, this international search report is restricted to the invention first mentioned in the claims; it is covered by claim numbers:

4.☐ As all searchable claims could be searched without effort justifying an additional fee, the International Searching Authority did not invite payment of any additional fee.

Remark on Protest
☐ The additional search fees were accompanied by applicant's protest.
☐ No protest accompanied the payment of additional search fees.

Form PCT/ISA/210 (supplemental sheet (2)) (October 1981)